# EUROPEAN PATENT APPLICATION

(11) **EP 4 678 792 A1**
(43) Date of publication of application: **14.01.2026**
(21) Application number: 24766720.7
(22) Date of filing: 31.01.2024
(51) Int. Cl.: D01F 6/40, D01F 6/18, D01F 6/54, D06M 11/44, D06M 11/46, D06M 13/11, D06M 15/55

(54) **MODACRYLIC FIBER AND FLAME-RETARDANT FIBER ASSEMBLY INCLUDING SAME**

(30) Priority: 07.03.2023 JP 2023034707; 06.12.2023 JP 2023206311
(71) Applicant: Kaneka Corporation, Osaka-shi, Osaka 530-8288 (JP)
(72) Inventor: NAKAMURA Shinya, Takasago-shi, Hyogo 676-8688 (JP); MIO Wataru, Takasago-shi, Hyogo 676-8688 (JP); UCHIBORI Keita, Takasago-shi, Hyogo 676-8688 (JP)
(74) Representative: Vossius & Partner Patentanwälte Rechtsanwälte mbB
(86) International application number: PCT/JP2024/002959
(87) International publication number: WO 2024/185345

(57) **Abstract**

One or more embodiments of the present invention relate to a modacrylic fiber including a modacrylic polymer, an epoxy group-containing compound, and a compound containing tin and zinc. The modacrylic polymer contains a vinylidene halide as a constitutional unit. The modacrylic fiber contains the epoxy group-containing compound in an amount of 1 to 4 parts by mass with respect to 100 parts by mass of the modacrylic polymer.

## Description

### Technical Field

The present invention relates to a modacrylic fiber and a flame-retardant fiber composite including the modacrylic fiber.

### Background Art

Conventionally, modacrylic fibers have generally been made flame retardant by adding about 1 to about 50 parts by mass of antimony compounds as flame retardants with respect to 100 parts by mass of the polymer (for example, Patent Document 1). However, since antimony compounds may affect the environment and the human body, flame retardants other than the antimony compounds are being considered. For example, in Patent Document 2, zinc stannate compound have been used to impart flame retardancy to halogen-containing fibers.

### Citation List

### Patent Documents

Patent Document 1: JP H4(1992)-18050A
Patent Document 2: JP H10(1998)-001822A

### Disclosure of Invention

### Problems to be Solved by the Invention

However, when the modacrylic fibers contain a vinylidene halide as a constitutional unit, the dehydrohalogenation reaction of the halogen-containing fibers caused by zinc contained in zinc hydroxystannate which is used as a flame retardant is easily accelerated, and thermal stability of the halogen-containing fibers become to be poor.

To address the above-described conventional problem, the present invention provides a modacrylic fiber with high flame retardancy and excellent thermal stability, and a flame-retardant fiber composite including the modacrylic fiber.

### Solution to Problem

One or more embodiments of the present invention relate to a modacrylic fiber including a modacrylic polymer, an epoxy group-containing compound, and a compound containing tin and zinc, where the modacrylic polymer contains a vinylidene halide as a constitutional unit, and the modacrylic fiber contains the epoxy group-containing compound in an amount of 1 to 4 parts by mass with respect to 100 parts by mass of the modacrylic polymer.

One or more embodiments of the present invention relate to a flame-retardant fiber composite including the modacrylic fiber.

### Effects of the Invention

The present invention can provide a modacrylic fiber with high flame retardancy and excellent thermal stability, and a flame-retardant fiber composite including the modacrylic fiber.

### Description of the Invention

The inventors of the present invention have conducted in-depth studies to improve the thermal stability of a modacrylic fiber that includes a modacrylic polymer containing a vinylidene halide as a constitutional unit, and a compound containing tin and zinc. As a result, the inventors found that when a predetermined amount of an epoxy group-containing compound was added to the modacrylic fiber, the thermal stability of the modacrylic fiber was improved.

Specifically, by adding a predetermined amount of the epoxy group-containing compound to the modacrylic fiber that includes a modacrylic polymer containing a vinylidene halide as a constitutional unit, and a compound containing tin and zinc, the generation of halogen gas was significantly reduced at a high temperature (for example, heating of the modacrylic fiber at 160°C for 60 minutes) and the deformation of the modacrylic fiber was inhibited. Moreover, both the thermal decomposition start temperature and the maximum shrinkage temperature of the modacrylic fiber were increased.

In this specification, when a numerical range is shown using "to", that includes the values at both ends (i.e., the upper limit and the lower limit). For example, a numerical range "A to B" is a range that includes A and B, which are the values at the two ends of the range, and is the same as "A or more and B or less". Moreover, any number or any range within that range is specifically disclosed. Also, in the present specification, when a plurality of numerical ranges are mentioned, the numerical ranges include appropriate combinations of upper and lower limits of different numerical ranges.

The modacrylic fiber contains the modacrylic polymer, the epoxy group-containing compound, and the compound containing tin and zinc. The modacrylic fiber may contain the modacrylic polymer in an amount of 70 mass% or more, 75 mass% or more, 80 mass% or more, 85 mass% or more, or 90 mass% or more, and may contain the modacrylic polymer in an amount of 98 mass% or less, 97 mass% or less, 96 mass% or less, or 95 mass% or less, and there is no particular limitation thereto.

Although any modacrylic polymer that contains a vinylidene halide as a constitutional unit may be used as the modacrylic polymer, from the viewpoint of heat resistance and flame retardancy, the modacrylic polymer preferably contains acrylonitrile in an amount of 30 to 70 mass% and the vinylidene halide in an amount of 30 to 70 mass%, more preferably contains acrylonitrile in an amount of 35 to 65 mass% and the vinylidene halide in an amount of 35 to 65 mass%, and still more preferably contains acrylonitrile in an amount of 40 to 60 mass% and the vinylidene halide in an amount of 40 to 60 mass%.

Examples of the vinylidene halide include vinylidene chloride and vinylidene bromide. The vinylidene halide may be used alone or in combination of two or more.

The modacrylic polymer may contain one or more other copolymerizable monomers in an amount of 0 to 3 mass% in addition to the acrylonitrile and the vinylidene halide.

Examples of the other copolymerizable monomers include, but not particularly limited to: unsaturated carboxylic acids typified by acrylic acids and methacrylic acids, as well as salts thereof; esters of unsaturated carboxylic acids, typified by methacrylic esters (e.g., methyl methacrylate), glycidyl methacrylate and the like; vinyl esters typified by vinyl acetate and vinyl butyrate; and sulfonic acid group-containing monomers. Examples of the sulfonic acid group-containing monomers include, but not particularly limited to, allylsulfonic acid, methallylsulfonic acid, styrenesulfonic acid, isoprenesulfonic acid, and 2-acrylamide-2-methylpropanesulfonic acid, as well as metal salts, e.g., sodium salts and amine salts thereof. The other copolymerizable vinyl monomers may be used alone, or two or more of them may be used in combination. Among them, the sulfonic acid group-containing monomers may be used from the viewpoint of improving dye-affinity.

Examples of the epoxy group-containing compound include, but not particularly limited to: glycidyl ether compounds, e.g., butyl glycidyl ether, neopentyl glycol diglycidyl ether, phenyl glycidyl ether, o-cresyl glycidyl ether, m-/p-cresyl glycidyl ether, 1,6-hexanediol diglycidyl ether, trimethylolpropane polyglycidyl ether, hydrogenated bisphenol-A glycidyl ether, propylene glycol diglycidyl ether, tripropylene glycol diglycidyl ether, polypropylene glycol diglycidyl ether, diethylene glycol diglycidyl ether, polyethylene glycol diglycidyl ether, glycerol polyglycidyl ether, diglycerol polyglycidyl ether, polyglycerol polyglycidyl ether, and sorbitol-based polyglycidyl ether; fatty acid-modified epoxy; glycidyl ester compounds, e.g., 1,3,5-tris(2,3-epoxypropyl)-1,3,5-triazine-2,4,6-trione (triglycidyl isocyanurate), tetrahydrophthalic acid diglycidyl ester, hexahydrophthalic acid diglycidyl ester, glycidyl methacrylate, and glycidyl acrylate; and homopolymers or copolymers thereof. In terms of coloration suppression, it is preferable to use, for example, a homopolymer of glycidyl methacrylate (poly(glycidyl methacrylate)), and a copolymer of glycidyl methacrylate.

Although there is no particular limitation on epoxy equivalent of the epoxy group-containing compound, from the viewpoint of efficiently improving thermal stability with a small adding amount, the epoxy equivalent of the epoxy group-containing compound is preferably 300 g/eq or less, more preferably 250 g/eq or less, and still more preferably 100 to 200 g/eq. In this specification, the epoxy equivalent of the epoxy group-containing compound is measured in accordance with JIS K 7236:2001.

The modacrylic fiber contains the epoxy group-containing compound in an amount of 1 to 4 parts by mass with respect to 100 parts by mass of the modacrylic polymer. When the amount of the epoxy group-containing compound is 1 part by mass or more, thermal stability of the modacrylic fiber is improved, and deformation can be suppressed when the modacrylic fiber is heated at a high temperature. Also, when the epoxy group-containing compound is used together with the compound containing tin and zinc, and the amount of the epoxy group-containing compound is 1 part by mass or more, flame retardancy of the modacrylic fiber is improved, and a char length and an afterglow time of the modacrylic fiber in vertical flammability test can be reduced. When the amount of the epoxy group-containing compound is 4 parts by mass or less, high flame retardancy can be maintained. The modacrylic fiber preferably contains the epoxy group-containing compound in an amount of 1.5 to 3.5 parts by mass, more preferably 1.5 to 3 parts by mass, and still more preferably 1.9 to 2.9 parts by mass, with respect to 100 parts by mass of the modacrylic polymer, from the viewpoint of more improving flame retardancy and thermal stability.

The zinc stannate compound may be used as the compound containing tin and zinc, from viewpoint of general-purpose, and there is no particular limitation thereto. The zinc stannate compound may be zinc stannate (ZnSnO₃) or zinc hydroxystannate (ZnSn(OH)₆). Among them, for example, zinc hydroxystannate is preferable from the viewpoint of more improving flame retardancy of the modacrylic fiber.

The modacrylic fiber preferably contains the compound containing tin and zinc in an amount of 1 to 20 parts by mass with respect to 100 parts by mass of the modacrylic polymer, from the viewpoint of flame retardancy and fiber strength. The modacrylic fiber more preferably contains the compound containing tin and zinc in an amount of 2 parts by mass or more, still more preferably 3 parts by mass or more, yet more preferably 4 parts by mass or more, yet more preferably 5 parts by mass or more, yet more preferably 6 parts by mass or more, and particularly preferably 8 parts by mass or more, from the viewpoint of more improving flame retardancy. The modacrylic fiber more preferably contains the compound containing tin and zinc in an amount of 18 parts by mass or less, still more preferably 16 parts by mass or less, and yet more preferably 14 parts by mass or less, with respect to 100 parts by mass of the modacrylic polymer, from the viewpoint of fiber strength and fabric strength. Or, the modacrylic fiber preferably contains the compound containing tin and zinc in an amount of 1 to 20 mass%, from the viewpoint of flame retardancy and fiber strength. The modacrylic fiber more preferably contains the compound containing tin and zinc in an amount of 2 mass% or more, still more preferably 3 mass% or more, yet more preferably 4 mass% or more, yet more preferably 5 mass% or more, yet more preferably 6 mass% or more, and particularly preferably 8 mass% or more, from the viewpoint of more improving flame retardancy. The modacrylic fiber more preferably contains the compound containing tin and zinc in an amount of 18 mass% or less, still more preferably 16 mass% or less, and yet more preferably 14 mass% or less, from the viewpoint of fiber strength and fabric strength. In this specification, the content of the compound containing tin and zinc in the modacrylic fiber can be measured by fluorescence X-ray analysis.

The modacrylic fiber contains substantially no antimony compound. This can reduce the environmental impact and costs. In this specification, the wording "containing substantially no antimony compound" means that an antimony compound serving as a flame retardant is not added to a modacrylic fiber or a flame-retardant fiber composite on purpose, and accordingly, the state where an antimony compound is contained as a contaminant or the like is considered as "containing substantially no antimony compound".

The modacrylic fiber preferably contains the modacrylic polymer in an amount of 70 to 98 mass%, the epoxy compound in an amount of 0.8 to 3.8 mass%, and the compound containing tin and zinc in an amount of 1 to 16 mass%, more preferably contains the modacrylic polymer in an amount of 75 to 97 mass%, the epoxy compound in an amount of 1.0 to 3.3 mass%, and the compound containing tin and zinc in an amount of 2 to 16 mass%, still more preferably contains the modacrylic polymer in an amount of 80 to 96 mass%, the epoxy compound in an amount of 1.5 to 2.9 mass%, and the compound containing tin and zinc in an amount of 2.5 to 14 mass%, and yet more preferably contains the modacrylic polymer in an amount of 85 to 95 mass%, the epoxy compound in an amount of 1.8 to 2.8 mass%, and the compound containing tin and zinc in an amount of 3.2 to 13 mass%, from the viewpoint of flame retardancy and fiber strength. The modacrylic fiber may contain one or more other additives e.g., an antistatic agent, a thermal coloration inhibitor, a light resistance improver, a whiteness improver, a devitrification inhibitor, and a colorant, as needed. The other additives may be used in an amount of 10 parts by mass or less, 5 parts by mass or less, or 3 parts by mass or less, for example, with respect to 100 parts by mass of the modacrylic polymer, and there is no particular limitation thereto.

The modacrylic fiber may be either a short fiber or a long fiber, and can be selected as appropriate depending on the method of use. The single fiber fineness of the modacrylic fiber, which is selected as appropriate depending on the intended use and the like of the flame-retardant fiber composite, is preferably 1 to 50 dtex, more preferably 1.5 to 30 dtex, and still more preferably 1.7 to 15 dtex. The fiber length of the modacrylic fiber is selected as appropriate depending on the intended use and the like of the flame-retardant fiber composite. For example, a short cut fiber (fiber length: 0.1 to 5 mm), a short fiber (fiber length: 15 to 176 mm, 20 to 160 mm, 25 to 138 mm, or 30 to 128 mm), or a long fiber (filament fiber) can be used.

The single fiber strength of the modacrylic fiber is preferably 1.0 to 4.0 cN/dtex and more preferably 1.5 to 3.5 cN/dtex, for example, from the viewpoint of durability. The elongation at break of the modacrylic fiber is preferably 15 to 40 % and more preferably 20 to 30%, for example, from the viewpoint of practicality. In this specification, the single fiber strength and the elongation at break of the modacrylic fiber can be measured accordance with JIS L 1013:2010 or JIS L 1015:2010.

The modacrylic fiber has excellent flame retardancy, and the limiting oxygen index (LOI) of the modacrylic fiber, which is measured according to the E method (E-1) of JIS L 1091, is preferably 41.0 or more, and more preferably 41.5 or more. In this specification, the LOI value can be specifically measured as described in Examples.

The modacrylic fiber has excellent thermal stability, and when heated at 160°C for 60 minutes, the deformation starting time of the modacrylic fiber is preferably 35 minutes or more, more preferably 40 minutes or more, still more preferably 45 minutes or more, and yet more preferably 50 minutes or more. In this specification, the deformation starting time of the modacrylic fiber can be specifically measured as described in Examples.

The modacrylic fiber has excellent thermal stability, and the thermal decomposition onset temperature of the modacrylic fiber, which is measured with thermogravimetric analysis/differential thermal analysis (TG/DTA), is preferably 197°C or more, more preferably 199°C or more, and still more preferably 201°C or more. In this specification, the thermal decomposition onset temperature of the modacrylic fiber can be specifically measured as described in Examples.

The modacrylic fiber has excellent thermal stability, and the maximum shrinkage temperature, which is measured with thermomechanical analysis (TMA), is preferably 194°C or more, more preferably 195°C or more, and still more preferably 196°C or more. In this specification, the maximum shrinkage temperature of the modacrylic fiber can be specifically measured as described in Examples.

The modacrylic fiber can be produced by, but not particularly limited to, spinning a composition that contains the modacrylic polymer, the epoxy group-containing compound, and the compound containing tin and zinc. The modacrylic fiber is preferably produced by wet spinning a spinning solution that contains the modacrylic polymer, the epoxy group-containing compound, the compound containing tin and zinc, and a solvent. The spinning solution may be obtained by dissolving the modacrylic polymer in the solvent and adding the epoxy group-containing compound and the compound containing tin and zinc to the obtained solution of the modacrylic polymer. The modacrylic fiber can be produced by the general wet spinning for modacrylic fibers, except using the above-described spinning solution. Specifically, the modacrylic fiber can be produced by extruding the spinning solution into a coagulation bath through a nozzle to coagulate it, then subjecting the coagulated filaments to drawing, washing with water, and drying. After drying, as needed, the obtained filaments may be subject to drawing and heat relaxing treatment. Further, the obtained filaments may be crimped and cut into any desired length as needed. Examples of the solvent include organic solvents, e.g., dimethyl sulfoxide, dimethylformamide, dimethylacetamide, and acetone, and inorganic solvents, e.g., a rhodan salt aqueous solution and a nitric acid aqueous solution.

In one or more embodiments of the present invention, the flame-retardant fiber composite contains the modacrylic fiber. Thus, the flame-retardant fiber composite has excellent flame retardancy and thermal stability. The flame-retardant fiber composite may include a flame-retardant fiber mixture. The flame-retardant fiber mixture may be formed by combining the modacrylic fiber and one or more other fibers.

The flame-retardant fiber composite may consist of 100 mass% of the modacrylic fiber, or may contain one or more other fibers as needed in addition to the modacrylic fiber. The other fibers may include a natural fiber, a regenerated fiber, and a synthetic fiber.

Examples of the natural fiber include: a natural cellulose fiber, e.g., a cotton fiber, a kapok fiber, a linen fiber, a hemp fiber, a ramie fiber, a jute fiber, a Manila hemp fiber, and a kenaf fiber; and a natural animal fiber, e.g., a wool fiber, a mohair fiber, a cashmere fiber, a camel fiber, an alpaca fiber, an angora fiber, and a silk fiber.

Examples of the regenerated fiber include: a regenerated cellulose fiber, e.g., a rayon fiber, a polynosic fiber, a cupra fiber, and a lyocell fiber; a regenerated collagen fiber; a regenerated protein fiber; a cellulose acetate fiber; and a promix fiber.

Examples of the synthetic fiber include a polyester fiber, a polyamide fiber, a polylactic acid fiber, an acrylic fiber, a polyolefin fiber (including polyethylene fibers, polypropylene fibers, and the like), a polyvinyl alcohol fiber, a polyvinyl chloride fiber, a polyvinylidene chloride fiber, a polychlal fiber, a polyurethane fiber, a polyoxymethylene fiber, a polytetrafluoroethylene fiber, an aramid fiber, a benzoate fiber, a polyphenylene sulfide fiber, a polyetheretherketone fiber, a polybenzazole fiber, a polyimide fiber, and a polyamide-imide fiber. In addition, a flame-retardant polyester fiber, a polyethylene naphthalate fiber, a melamine fiber, an acrylate fiber, a polybenzoxide fiber, an oxidized acrylic fiber, a carbon fiber, a glass fiber, and an activated carbon fiber, and the like also can be used as the synthetic fiber.

The other fibers may be preferably the natural fiber, the regenerated cellulose fiber, the polyester fiber, the aramid fiber, the melamine fiber, and the like. The aramid fiber may be either a para-aramid fiber or a meta- aramid fiber.

The other fibers may be used alone, or two or more of them may be used in combination.

The flame-retardant fiber composite may include a cellulose fiber in addition to the modacrylic fiber, from the viewpoint of imparting excellent texture, moisture absorption, and touch, in addition to flame retardancy and thermal stability. The cellulose fiber may be either the natural cellulose fiber or the regenerated cellulose fiber.

The flame-retardant fiber composite may contain the modacrylic fiber in an amount of 25 to 100 mass% and the cellulose fiber in an amount of 0 to 75 mass%, the modacrylic fiber in an amount of 30 to 90 mass% and the cellulose fiber in an amount of 10 to 70 mass%, or the modacrylic fiber in an amount of 35 to 80 mass% and the cellulose fiber in an amount of 20 to 65 mass%.

The flame-retardant fiber composite preferably contains one or more other fibers selected from the group consisting of the cellulose fiber and the aramid fiber, and more preferably contains one or more other fibers selected from the group consisting of the lyocell fiber and the aramid fiber in addition to the modacrylic fiber, from the viewpoint of thermal stability, flame retardancy, and texture. The flame-retardant fiber composite may contain the modacrylic fiber in an amount of 30 to 90 mass% and one or more other fibers selected from the group consisting of the cellulose fiber and the aramid fiber in an amount of 10 to 70 mass%, or may contain the modacrylic fiber in an amount of 35 to 80 mass% and one or more other fibers selected from the group consisting of the cellulose fiber and the aramid fiber in an amount of 20 to 65 mass%. The flame-retardant fiber composite may contain the modacrylic fiber in an amount of 30 to 79 mass%, the lyocell fiber in an amount of 20 to 50 mass%, and the aramid fiber in an amount of 1 to 15 mass%, or may contain the modacrylic fiber in an amount of 35 to 70 mass%, the lyocell fiber in an amount of 25 to 50 mass%, and the aramid fiber in an amount of 5 to 15 mass%

The other fibers may be either short fibers or long fibers, and can be selected as appropriate depending on the method of use. The single fiber fineness of the other fibers, which is selected as appropriate depending on the intended use and the like of the fabric, is preferably 1 to 50 dtex, more preferably 1.5 to 30 dtex, and still more preferably 1.7 to 15 dtex. The fiber length of the other fibers is selected as appropriate depending on the intended use and the like of the fabric. For example, a short cut fiber (fiber length: 0.1 to 5 mm), a short fiber (fiber length: 15 to 176 mm, 20 to 160 mm, 25 to 138 mm, or 30 to 128 mm), or a long fiber (filament fiber) that is not cut at all can be used.

The flame-retardant fiber composite may include those obtained by fiber blending, mixed spinning, and filament blending, conjugated yarns e.g., paralleled yarns, folded yarns, and sheath-core yarns, and those obtained by mixed weaving, mixed knitting, and laminating. The specific form of the flame-retardant fiber composite may be cotton for use as stuffing or the like, a spun yarn, a nonwoven fabric, a fabric, e.g., a woven fabric and a knitted fabric, a braided fabric, or the like.

Examples of the cotton for use as stuffing or the like include opened cotton, ball-like cotton, webs, and molded cotton.

Examples of the spun yarn include ring spun yarns, air spun yarns, and air jet spun yarns.

Examples of the nonwoven fabric include wet-laid nonwoven fabrics, carded nonwoven fabrics, air-laid nonwoven fabrics, thermal bonded nonwoven fabrics, chemical bonded nonwoven fabrics, needle-punched nonwoven fabrics, hydro-entangled nonwoven fabrics, and stitch bonded nonwoven fabrics. Thermal bonded nonwoven fabrics and needle-punched nonwoven fabrics are industrially inexpensive. The nonwoven fabric may have any structure that is uniform in the thickness, width, and length directions, a distinctive laminate structure, and an indistinct laminated structure.

Examples of the woven fabric include plain weave fabrics, twill weave fabrics, satin weave fabrics, irregular plain weave fabrics, irregular twill weave fabrics, irregular satin weave fabrics, fancy weave fabrics, Jacquard weave fabrics, woven fabrics using two or more types of yarn for either one of the warp and the weft, double weave fabrics, multiple weave fabrics, warp pile woven fabrics, weft pile woven fabrics, and leno weave fabrics. Plain weave fabrics, satin weave fabrics, and Jacquard weave fabrics exhibit excellent texture, strength, and the like as commercial products.

Examples of the knitted fabric include circular knitted fabrics, weft knitted fabrics, warp knitted fabrics, and pile knitted fabrics, and more specific examples thereof include plain stitch fabrics, jersey stitch fabrics, rib stitch fabrics, smooth knitted fabrics (interlock stitch fabrics), elastic rib stitch fabrics, purl stitch fabrics, denbigh stitch structures, cord stitch structures, atlas stitch structures, chain stitch structures, and laid-in structures. Of these, jersey stitch fabrics and/or rib stitch fabrics are excellent in texture as commercial products.

The modacrylic fiber and the flame-retardant fiber composite may be used in various textile products (applications). Examples of textile products include the following products.

### (1) Clothing and Materials of Daily Necessities

Clothes (including jackets, underwear, sweaters, vests, trousers, and the like), gloves, socks, mufflers, hats, bedding, pillows, cushions, stuffed toys, and the like (2) Special Purpose Clothing

Work clothing worn by workers who handle fire including protective clothing and firefighting clothing, cold weather clothing, and the like

### (3) Interior Materials

Chair upholstery, curtains, wallpaper, carpets, and the like

### (4) Industrial Materials

Filters, flame-resistant stuffing, lining materials, and the like

The flame-retardant fiber composite has excellent flame retardancy, and the limiting oxygen index (LOI) of the flame-retardant fiber composite, which is measured according to the E method (E-1) of JIS L 1091, is preferably 32.0 or more, and more preferably 32.5 or more.

The flame-retardant fiber composite has excellent flame retardancy, and the char length of the flame-retardant fiber composite, which is measured by the flammability test (vertical method) based on ASTM D6413-99, is preferably 31 mm or less, and more preferably 30 mm or less. Further, the afterglow time of the flame-retardant fiber composite, which is measured by the flammability test (vertical method) based on ASTM D6413-99, is preferably 13.0 seconds or less, more preferably 12.5 seconds or less, still more preferably 12.0 seconds or less, yet more preferably 11.5 seconds or less, and yet more preferably 11.0 seconds or less.

Although there is no particular limitation on the basis weight of the flame-retardant fiber composite, and when the flame-retardant fiber composite is a fabric, the basis weight is preferably 150 to 400 g/m², more preferably 200 to 380 g/m², and even more preferably 220 to 350 g/m² from the viewpoint of texture.

### Examples

The present invention will be described more specifically with reference to examples. It is to be noted, however, that the present invention is not limited to the following examples.

The measurement and evaluation methods used in examples and comparative examples are as follows.

Generation Amount of Chlorine Gas
(1) A sample (fibers) was collected in a midget impinger. A midget impinger for collecting gas generated by heating which included 25 mL of an absorbing liquid (ultrapure water) was connected to the midget impinger in which the sample was collected.
(2) Then, after connecting the midget impinger for collecting gas generated by heating to a suction pump, the midget impinger in which the sample was collected was placed in a dryer whose temperature was adjusted to 160°C. Then, the midget impinger in which the sample was collected was heated for 60 min while sucking gas with the pump, and the heating-generated gas was collected in the absorbing liquid.
(3) The absorbing liquid in which the heating-generated gas was collected was subjected to an ion chromatograph (Dionex Integrion RFIC, manufactured by Thermo Fisher Scientific) to quantify the amount of chlorine gas generated by heating.

### Deformation Starting Time

A pellet sample with a diameter of 20 mm was prepared with fibers (0.5 g) using a compressor. The pellet sample was placed in a dryer whose temperature was adjusted to 160°C, and the time at which the sample started to shrink was visually observed through an observation window.

### Thermal Decomposition Onset Temperature

The thermal decomposition onset temperature of a sample (fibers) was evaluated by TG/DTA measurement (TG/DTA 7200, manufactured by Hitachi High-Tech Science). The measurement conditions were as follows: under atmospheric atmosphere, measurement temperature range: 30 to 350°C, and temperature rise rate: 5°C/min.

### Maximum Shrinkage Temperature

The maximum shrinkage temperature of a sample (fibers) was evaluated by TMA measurement (TMA/SS 6100, manufactured by Hitachi High-Tech Science). The measurement conditions were as follows: measurement temperature range: 30 to 600°C, temperature rise rate: 10°C/min, load: 18 mN, sample length: 5 mm, sample fineness: 3000 dtex, nitrogen flow: 500 mL/min.

### Limiting Oxygen Index (LOI)

A twisted string sample was prepared using 0.25 g of fibers or a fiber composite. After the sample was ignited, it was removed from the fire and the minimum oxygen index required for the sample to combust at least 5 cm was measured.

### Flammability Test

The char length and the afterglow time of a fabric were measured by a flammability test (vertical method) based on ASTM D6413-99. The char length of the fabric is defined as the distance from the fabric edge, which is directly exposed to the flame under test conditions of ASTM D6413-99 (Standard Test Method for Flame Resistance of Textiles (Vertical Method)) to the furthest point of visible fabric damage after a specified tearing force has been applied. The shorter the char length, the better the flame retardancy. The shorter the afterglow time, the better the flame retardancy (flame resistance).

The following compounds were used in the Examples and Comparative examples.

Modacrylic polymer: Modacrylic polymer containing 51.5 mass% of acrylonitrile, 47.0 mass% of vinylidene chloride, and 1.5 mass% of sodium p-styrenesulfonate was obtained through emulsion polymerization of acrylonitrile, vinylidene chloride, and sodium p-styrenesulfonate.
Compound containing tin and zinc: Zinc hydroxystannate (manufactured by SCL Italia. Spa, product name "ZHS")
Epoxy group-containing compound: Poly(glycidyl methacrylate) (product name "Marproof (registered trademark) G-01100" manufactured by NOF Corporation, epoxy equivalent:150 g/eq)

### Examples 1 to 7, Comparative Examples 1 to 4

The modacrylic polymer was dissolved in dimethyl sulfoxide such that the modacrylic polymer content was 28 mass%. Zinc hydroxystannate and the epoxy group-containing compound were added to the obtained modacrylic polymer solution in amounts as shown in Table 1 below with respect to 100 parts by mass of the modacrylic polymer, the resulting mixture was mixed uniformly, and thus a spinning solution was obtained. The obtained spinning solution was coagulated by being extruded into a 57 mass% aqueous solution of dimethyl sulfoxide at 25°C through a nozzle provided with 115,000 holes and each hole having a diameter of 0.07 mm, followed by washing with water and drying at 130 to 140°C for 20 minutes. The obtained filaments were drawn to 2.6 times their original length at 135°C, followed by heat treatment at 155°C for 15 minutes. Thus, modacrylic fibers with a single fiber fineness of 1.7 dtex were obtained.

### Examples 8 to 10, Comparative Examples 5 to 7

The modacrylic fibers (cut length 51 mm) and cotton fibers (natural cotton fibers with a cut length of 38 mm or less) shown in Table 2 below were blended together in amounts as shown in Table 2, and thus a fiber composite was obtained.

### Examples 11 to 14, Comparative Example 8

The modacrylic fibers (cut length 51 mm) of Examples 7 to 12, lyocell fibers ("TENCEL (registered trademark)", manufactured by Lenzing AG, single fiber fineness: 1.3 dtex, fiber length: 51 mm), and para-aramid fibers (Taparan (registered trademark), manufactured by Yantai Tayho Advanced Materials Co., Ltd., single fiber fineness: 1.7 dtex, fiber length: 51 mm) were blended together in amounts as shown in Table below. The resulting fiber blend was opened with a carding machine ("sample roller card SC-500", manufactured by DIAWAKIKO Co., LTD.) and produced into slivers using a small drawing machine ("TSM-DFS", manufactured by INTEC Co., LTD.). Then, the obtained slivers were produced into roving yarns by a high-speed roving frame ("FL200", manufactured by TOYOTA INDUSTRIES CORPORATION), and the obtained roving yarns were produced into 20/1 count spun yarns by a high-speed spinning frame ("UA37", manufactured by Howa Machinery, Ltd.). A single knitted fabric having a basis weight of about 275 g/m² was produced by a computerized flat knitting machine ("SSG 122FC", manufactured by SHIMA SEIKI MFG., LTD.) using the obtained spun yarns.

The generation amount of chlorine gas, deformation starting time,
thermal decomposition onset temperature, maximum shrinkage temperature, and LOI value of the modacrylic fibers of Examples 1 to 7 and Comparative Examples 1 to 4 were measured as described above. The results are shown in Table 1 below.

The LOI values of the fiber composites of Examples 8 to 10 and Comparative Examples 5 to 7 were measured as described above. The results are shown in Table 2 below. The char length and afterglow time of the knitted fabrics of Examples 11 to 14 and Comparative Example 4 were measured as described above. The results are shown in Table 3 below.

**Table 1**

| | Amounts (parts by mass) | | | Generation amount of chlorine gas (mg/kg) | Deformation starting time (min.) | Thermal decomposition onset temperature (°C) | Maximum shrinkage temperature (°C) | LOI value |
|---|---|---|---|---|---|---|---|---|
| | Modacrylic polymer | Zinc hydroxy stannate | Epoxy group-containing compound | | | | | |
| Ex. 1 | 100 | 9 | 1.9 | 2000 | 40 | 202 | 196 | 43.0 |
| Ex. 2 | 100 | 9 | 2.9 | 150 | 55 | 205 | 199 | 42.0 |
| Ex. 3 | 100 | 9 | 3.9 | 100 | 70 | 210 | 203 | 41.5 |
| Ex. 4 | 100 | 4 | 1.9 | 2000 | 40 | 205 | 196 | 36.7 |
| Ex. 5 | 100 | 4 | 2.9 | 150 | 55 | 208 | 200 | 36.0 |
| Ex. 6 | 100 | 4 | 3.9 | 100 | 70 | 215 | 203 | 35.5 |
| Ex. 7 | 100 | 6 | 2.9 | 130 | 55 | 208 | 200 | 38.5 |
| Comp. Ex. 1 | 100 | 9 | 0.9 | 51000 | 25 | 195 | 192 | 42.8 |
| Comp. Ex. 2 | 100 | 9 | 4.9 | 100 | 85 | 212 | 206 | 40.9 |
| Comp. Ex. 3 | 100 | 9 | 10.9 | 100 | 175 | 223 | 225 | 37.0 |
| Comp. Ex. 4 | 100 | 4 | 0.9 | 50000 | 25 | 200 | 192 | 37.6 |

**Table 2**

| | Modacrylic fibers | | Cotton fibers | LOI value |
|---|---|---|---|---|
| | Kind | Amount (parts by mass) | Amount (parts by mass) | |
| Ex. 8 | Ex.1 | 60 | 40 | 33.7 |
| Ex. 9 | Ex.2 | 60 | 40 | 33.0 |
| Ex. 10 | Ex.3 | 60 | 40 | 32.8 |
| Comp. Ex. 5 | Comp. Ex.1 | 60 | 40 | 34.7 |
| Comp. Ex. 6 | Comp. Ex.2 | 60 | 40 | 32.5 |
| Comp. Ex. 7 | Comp. Ex.3 | 60 | 40 | 30.7 |

**Table 3**

| | Kind of modacrylic fibers | Amounts (parts by mass) | | | Afterglow time (Sec.) | Char length (mm) |
|---|---|---|---|---|---|---|
| | | Modacrylic fibers | Lyocell fibers | Para- aramid fibers | | |
| Ex. 11 | Ex.4 | 48 | 37 | 15 | 10.8 | 25 |
| Ex. 12 | Ex.5 | 48 | 37 | 15 | 9.1 | 27 |
| Ex. 13 | Ex.6 | 48 | 37 | 15 | 8.7 | 30 |
| Ex. 14 | Ex.7 | 40 | 48 | 12 | 8.4 | 31 |
| Comp. Ex. 8 | Comp. Ex.4 | 48 | 37 | 15 | 13.4 | 32 |

From the data shown in Table 1, it was found that, in Examples 1 to 7 and Comparative Examples 2 and 3, in which 1 part by mass or more of the epoxy group-containing compound was added with respect to 100 parts by mass of the modacrylic polymer, the amount of chlorine gas generated when the modacrylic fibers were heated at 160°C for 60 minutes was suppressed compared to Comparative Example 1 or 4, in which less than 1 part by mass of the epoxy group-containing compound was added. Furthermore, in Examples 1 to 7 and Comparative Examples 2 and 3, in which 1 part by mass or more of the epoxy group-containing compound was added with respect to 100 parts by mass of the modacrylic polymer, the time until the modacrylic fibers started to deform when heated at 160°C was longer than in Comparative Example 1 or 4, in which less than 1 part by mass of the epoxy group-containing compound was added. In other words, it can be said that the deformation of the modacrylic fibers can be suppressed by suppressing dehydrochlorination of the modacrylic fibers at high temperatures.

Furthermore, the thermal decomposition onset temperature evaluated by TG/DTA measurement and the maximum shrinkage temperature evaluated by TMA measurement were also correlated with the content of the epoxy compound, and it is clear that the epoxy group compound contributes to improving the thermal stability of the modacrylic fibers.

On the other hand, the modacrylic fibers of Comparative Examples 2 and 3, in which the content of the epoxy group-containing compound was more than 4 parts by mass, had lower limiting oxygen index (LOI) values than the modacrylic fibers of Examples 1 to 3 and Comparative Example 1, indicating that the flame retardancy of the modacrylic fibers of Comparative Examples 2 and 3 was poor.

From the data shown in Table 2, it was found that, the fiber composites of Examples 8 to 10, which used respectively the modacrylic fibers of Examples 1 to 3, in which 1 to 4 parts by mass of the epoxy group-containing compound was added with respect to 100 parts by mass of the modacrylic polymer, had higher limiting oxygen index (LOI) values and higher flame retardancy than the fiber composites of Comparative Examples 6 and 7, which used respectively the modacrylic fibers of Comparative Examples 2 and 3, in which the amount of the epoxy group-containing compound added was more than 4 parts by mass.

From the data shown in Table 3, it was found that,the knitted fabrics of Examples 11 to 14, which used respectively the modacrylic fibers of Examples 4 to 7, in which 1 to 4 parts by mass of the epoxy group-containing compound was added with respect to 100 parts by mass of the modacrylic polymer, had shorter char length and afterglow time and higher flame retardancy (flame resistance) than the knitted fabric of Comparative Example 8, which used the modacrylic fibers of Comparative Example 4, in which the amount of the epoxy group-containing compound added was less than 1 part by mass.

The present invention is not particularly limited, but may encompass the following embodiments, for example.
[1] A modacrylic fiber including:
   a modacrylic polymer;
   an epoxy group-containing compound; and
   a compound containing tin and zinc,
   wherein the modacrylic polymer contains a vinylidene halide as a constitutional unit, and
   the modacrylic fiber contains the epoxy group-containing compound in an amount of 1 to 4 parts by mass with respect to 100 parts by mass of the modacrylic polymer.
[2] The modacrylic fiber according to [1],
   wherein the compound containing tin and zinc contains a zinc stannate compound.
[3] The modacrylic fiber according to [1] or [2],
   wherein the modacrylic fiber contains the compound containing tin and zinc in an amount of 1 to 20 parts by mass with respect to 100 parts by mass of the modacrylic polymer.
[4] The modacrylic fiber according to any one of [1] to [3],
   wherein the epoxy group-containing compound has an epoxy equivalent of 100 to 200 g/eq.
[5] The modacrylic fiber according to any one of [1] to [4],
   wherein the modacrylic polymer contains acrylonitrile in an amount of 30 to 70 mass% and the vinylidene halide in an amount of 30 to 70 mass%.
[6] The modacrylic fiber according to any one of [1] to [5],
   wherein a limiting oxygen index of the modacrylic fiber is 41.0 or more.
[7] The modacrylic fiber according to any one of [1] to [6],
   wherein when the modacrylic fiber is heated at 160°C for 60 min, a deformation starting time of the modacrylic fiber is 35 minutes or more.
[8] A flame-retardant fiber composite containing the modacrylic fiber according to any one of [1] to [7].
[9] The flame-retardant fiber composite according to [8],
   further containing one or more other fibers selected from the group consisting of a cellulose fiber and an aramid fiber.
[10] The flame-retardant fiber composite according to [8] or [9],
   wherein the cellulose fiber contains one or more selected from the group consisting of a natural cellulose fiber and a lyocell fiber.
[11] The flame-retardant fiber composite according to any one of [8] to [10],
   wherein a char length of the flame-retardant fiber composite measured by a flammability test based on ASTM D6413-99 is 31 mm or less.
[12] The flame-retardant fiber composite according to any one of [8] to [11],
   wherein an afterglow time of the flame-retardant fiber composite measured by a flammability test based on ASTM D6413-99 is 13.0 seconds or less.

## Claims

1. A modacrylic fiber comprising:
a modacrylic polymer;
an epoxy group-containing compound; and
a compound containing tin and zinc,
wherein the modacrylic polymer comprises a vinylidene halide as a constitutional unit, and
the modacrylic fiber comprises the epoxy group-containing compound in an amount of 1 to 4 parts by mass with respect to 100 parts by mass of the modacrylic polymer.

2. The modacrylic fiber according to claim 1,
wherein the compound containing tin and zinc comprises a zinc stannate compound.

3. The modacrylic fiber according to claim 1,
wherein the modacrylic fiber comprises the compound containing tin and zinc in an amount of 1 to 20 parts by mass with respect to 100 parts by mass of the modacrylic polymer.

4. The modacrylic fiber according to claim 1,
wherein the epoxy group-containing compound has an epoxy equivalent of 100 to 200 g/eq.

5. The modacrylic fiber according to claim 1,
wherein the modacrylic polymer comprises acrylonitrile in an amount of 30 to 70 mass% and the vinylidene halide in an amount of 30 to 70 mass%.

6. The modacrylic fiber according to claim 1,
wherein a limiting oxygen index of the modacrylic fiber is 41.0 or more.

7. The modacrylic fiber according to claim 1,
wherein when the modacrylic fiber is heated at 160°C for 60 min, a deformation starting time of the modacrylic fiber is 35 min or more.

8. A flame-retardant fiber composite comprises the modacrylic fiber according to any one of claims 1 to 7.

9. The flame-retardant fiber composite according to claim 8,
further comprising one or more other fibers selected from the group consisting of a cellulose fiber and an aramid fiber.

10. The flame-retardant fiber composite according to claim 8,
wherein the cellulose fiber comprises one or more selected from the group consisting of a natural cellulose fiber and a lyocell fiber.

11. The flame-retardant fiber composite according to claim 8,
wherein a char length of the flame-retardant fiber composite measured by a flammability test based on ASTM D6413-99 is 31 mm or less.

12. The flame-retardant fiber composite according to claim 8,
wherein an afterglow time of the flame-retardant fiber composite measured by a flammability test based on ASTM D6413-99 is 13.0 seconds or less.
